# EUROPEAN PATENT SPECIFICATION

(11) **EP 3 332 575 B1**
(45) Date of publication and mention of the grant of the patent: **06.05.2020**
(21) Application number: 15756254.7
(22) Date of filing: 05.08.2015
(51) Int. Cl.: H04W 24/02

(54) **DISTRIBUTED MANAGEMENT OF NETWORK SLICES USING A GOSSIP PROTOCOL**
VERTEILTE VERWALTUNG VON NETZWERK-SLICES UNTER VERWENDUNG EINES GOSSIP-PROTOKOLLS
GESTION DISTRIBUÉE DE TRANCHES DE RÉSEAU À L'AIDE D'UN PROTOCOLE DE TYPE COMMÉRAGE

(43) Date of publication of application: 13.06.2018
(73) Proprietor: Telefonaktiebolaget LM Ericsson (publ), 164 83 Stockholm (SE)
(72) Inventor: VULGARAKIS FELJAN, Aneta, S-162 43 Vällingby (SE); BARARSANI, Azadeh, S-169 56 Solna (SE); WANG, Keven, S-191 37 Sollentuna (SE); SEYVET, Nicolas, S-164 45 Kista (SE)
(74) Representative: Ericsson
(86) International application number: PCT/SE2015/050852
(87) International publication number: WO 2017/023196

(56) References cited:
- "Network Functions Virtualization and Software Management", , 1 December 2014 (2014-12-01), XP055260149, Retrieved from the Internet: URL:http://www.ericsson.com/res/docs/white papers/network-functions-virtualization-an d-software-management.pdf [retrieved on 2016-03-21]
- ANTONIO MANZALINI ET AL: "Towards Resource-Aware Network of Networks", WIRELESS PERVASIVE COMPUTING (ISWPC), 2010 5TH IEEE INTERNATIONAL SYMPOSIUM ON, IEEE, PISCATAWAY, NJ, USA, 5 May 2010 (2010-05-05), pages 221-225, XP031688732, ISBN: 978-1-4244-6855-3
- FRIEDER GANZ ET AL: "A mediated gossiping mechanism for large-scale sensor networks", GLOBECOM WORKSHOPS (GC WKSHPS), 2011 IEEE, IEEE, 5 December 2011 (2011-12-05), pages 405-409, XP032124618, DOI: 10.1109/GLOCOMW.2011.6162480 ISBN: 978-1-4673-0039-1

## Description

### Technical field

The technology disclosed herein relates generally to the field of communications systems and in particular to a method, a computer program, a computer program product, a network element of a communications system, for distributed management of network slices.

### Background

The Fifth Generation (5G) communications system is seen as a network platform where billions of devices will be interconnected and connected towards the Internet. In the 5G scope, the number of devices and network elements will be orders of magnitude larger than in current communication systems. Traffic volumes and data rates required by some applications will also be multiplied hundreds or thousands times compared to the corresponding current numbers. However, not all predicted use cases will require the same data rates, resources etc., and the 5G system should be flexible so that, for instance, speed, capacity and coverage may be allocated in logical network slices according to the specific demands of each use case. Consequently, in order to meet new types of use cases, new types of connectivity services will be needed that should be highly scalable in terms of e.g. speed, capacity, reliability and availability. In view of this, a critical enabler for 5G system will be the concept of the so called "network slices" in which network resources will be offered on demand according to a service level agreement (SLA).

Document "Network Functions Virtualization Software Management", Ericsson white paper, December 2014, discloses network functions virtualization where network slicing is implemented. Separate management domains can be set up for different network slices.

The management of network slices will be a challenge. It should, for instance, be possible to handle an SLA upgrade in a network slice. As an example, when a device upgrades its SLA at runtime and requires more bandwidth, some network elements may have to be changed to handle the new situation. Another example on requirements of the management is the need to adapt to internal network changes, such as for instance when one network element in a network slice is going to upgrade or some other network element suddenly has a high capacity.

### Summary

The invention is defined by the appended set of claims.

Today, networks are managed in a centralized manner, i.e. one or few nodes are used for coordinating all network elements. Such centralized management typically requires complex solutions for providing reliability and availability and also suffer from scalability problems.

Systems based on centralized servers are vulnerable to failures, attacks and mismanagement. In the 5G scope, the number of devices and network elements will be orders of magnitude larger than in current systems making such management unsuitable for 5G systems.

The management used in current systems is hence not well suited for future connectivity systems, such as 5G systems, and that viable solutions for handling of network slices are required for these future connectivity systems.

An objective of the present disclosure is to address the above described issues and to provide methods and network elements enabling efficient management of network slices.

The objective is according to an aspect achieved by a method of distributed management of network slices, wherein each network slice comprises one or more network elements and provides one or more devices with network connectivity to services. The method is performed in a network element of a communications system and comprises: receiving, by means of a gossip protocol, information from one or more neighboring network elements; and performing, based on the received information, an action relating to one or more network slices, which network slices provide a first device with wireless connectivity to a service.

The method provides an efficient method of handling network slices, and provides in particular a distributed management of network slices of e.g. 5G systems by introducing peer-to-peer information exchange about network slices. This is in contrast to the centralized management, wherein data has to be moved upwards in the system hierarchy for a decision to be taken, which is then executed downwards in the system hierarchy. This centralized management is expensive in terms of network bandwidth, since each data packet about devices or network elements moving in the system consumes a part of the available total bandwidth. By instead, according to the present method, exchanging information between neighboring network elements increased efficiency is provided.

The objective is according to an aspect achieved by a computer program for a network element for distributed management of network slices. The computer program comprises computer program code, which, when executed on at least one processor on the network element causes the network element to perform the method as above.

The objective is according to an aspect achieved by a computer program product comprising a computer program as above and a computer readable means on which the computer program is stored.

The objective is according to an aspect achieved by a network element of a communications system for distributed management of network slices, wherein each network slice comprises one or more network elements and provides one or more devices with network connectivity to services. The network element is configured to: receive, by means of a gossip protocol, information from one or more neighboring network elements; and perform, based on the received information, an action relating to one or more network slices, which network slices provide a first device with wireless connectivity to a service.

Further features and advantages of the embodiments of the present teachings will become clear upon reading the following description and the accompanying drawings.

### Brief description of the drawings

Figure 1 illustrates schematically an environment in which embodiments according to the present teachings may be implemented.
Figure 2 illustrates information spreading using a gossip based algorithm.
Figures 3a, 3b and 3c illustrate changes of a network slice.
Figure 4 illustrates a flow chart over steps of an embodiment of a method in a network element in accordance with the present teachings.
Figure 5 illustrates schematically a network element and means for implementing embodiments of the present teachings.
Figure 6 illustrates a network element comprising function modules/software modules for implementing embodiments of the present teachings.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

In an aspect of the present teachings, a distributed system for the management of network slices is suggested. Methods for information flow based on a gossip type of protocol, sometimes also denoted epidemic protocol, is provided for enabling efficient management. This distributed system may be used as a complement to a centralized management system.

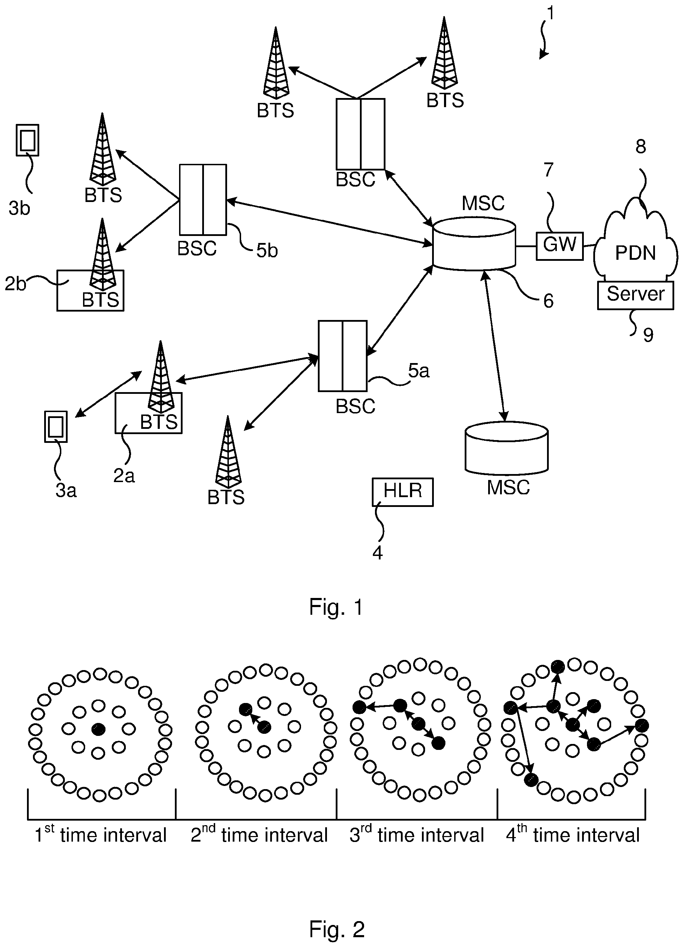

Figure 1 illustrates an environment in which embodiments according to the present teachings may be implemented. A communications system 1 is illustrated comprising a number of network elements. The communications system 1 may comprise a wireless communication system such as, for instance, a 2G, 3G, 4G or 5G network or a Wireless Local Area Network (WLAN) e.g. Wi-Fi network. Such wireless communication system may encompass radio access nodes as well as core network nodes (also denoted backbone nodes). The communications system 1 may comprise both a wireless communication system part and a wired communication system part, e.g. a wireless communication system as mentioned and also network elements of e.g. an external packet data network 8.

The network element may, for instance, comprise a network node 2a, 2b providing radio access to devices 3a, 3b. Such network node 2a, 2b may be denoted in different ways depending on standards implemented in the communications system 1. For instance, while a network node handling the radio access to devices 3a, 3b is known as base transceiver station (BTS) in Global System for Mobile Communications (GSM), it is known as evolved Node B or eNB in Long Term Evolution (LTE) systems. The network nodes 2a, 2b, which in the following are denoted radio access nodes 2a, 2b, may implement different wireless access technologies (RATs), such as 3G, 4G, LTE, Bluetooth or Wi-Fi, to mention a few examples.

The network element may comprise a cell provided and controlled by a radio access node 2a, 2b, or the network element may comprise a router, switch, firewall, and/or server, e.g. a server providing a specific network function such as a Call Session Control Function (CSCF) or Home Location Register (HLR) 4. Further examples on network element comprise Base Station Controller (BSC) 5a, 5b, or correspondingly (for LTE) Radio Network Controller (RNC), and Mobile Switching Center (MSC) 6 or correspondingly (for LTE) Mobility Management Entity (MME), or gateway 7 providing connectivity to packet data networks (PDNs) 8 such as e.g. Internet. Examples of such gateways comprise (for LTE) Packet Data Network Gateway (PDN-GW) and (for 2G and 3G systems) Gateway GPRS support node (GGSN). It is noted that there are various other network elements, not mentioned here. It is further noted that although the exemplary communications system 1 shown in figure 1 uses the notations of GSM, the present teachings are not limited thereto, nor to the mentioned LTE systems.

In the present description, a "network slice" may be defined as a manageable logical entity comprising one or more network elements. The network slice is composed of one or several network elements. The network slice may comprise a single network element, and to mention a few particular examples, a network slice may comprise a radio access node 2a, 2b or part of a radio access node 2a, 2b, or comprise a radio access node 2a, 2b or part of a radio access node 2a, 2b, a BSC/RNC 5a, 5b and a MSC/MME 6. The network slice may further comprise network elements in a packet data network 8, e.g. a server 9 or part of a server of the Internet. In low-speed communications networking, a network slice may represent a subdivision of a channel buffer. Sections of the buffer may be divided into network slices that are used for buffering network messages and data.

The network slice provides network connectivity for one or more devices 3a, 3b. The network connectivity may be a wireless connectivity and/or a wired connectivity. The network slice may for instance comprise a single network element, e.g. radio access node 2a, 2b, in which case the network slice provides wireless connectivity to the devices 3a, 3b. In other instances the network slice comprises several network elements 2a, 2b, 3, 4, 5a, 5b, 6, 7, for instance a radio access node 2a, and one or more core network elements such as e.g. a BSC 5a, and an MSC 6, in which case the network slice provides both wireless connectivity as well as wired connectivity.

The term "device" is used for representing different types of terminals that use network connectivity to provide certain functionality. The device may, for instance, comprise a mobile phone, a smart phone, a vehicle with cellular network connection, a sensor with network connectivity, etc. The device consumes one or more network slices: a device having a high SLA may require several network slices while a device having low requirements may need only part of a network slice, i.e. several such low requirement devices may share one network slice.

The present teachings offer a method for management of network slices, wherein the network elements of the network slice may negotiate a knowledge summary from/within neighboring network elements or from/within network slices. A summary or profile may, for instance, be exchanged between neighboring network elements. The amount of details and completeness of the summary may, with use of the mentioned gossip type protocol, be negotiated between the network elements about their capabilities.

The present teachings suggest use of a peer-to-peer management approach by allowing network elements and network slices to communicate over an epidemic protocol. Such protocols are highly tolerant to many failures scenarios, easy to deploy and efficient. The randomized point-to-point message exchange is an approach that makes the idea robust event in case of overload or in case nodes and/or network elements are dynamically added or removed. A result is that if, and when a network element, for instance a network element such as a MSC 6 or any other higher network element fails, then using this approach, the lower network elements, e.g. radio access nodes 2a, 2b (BTSs), will still be able to handle events such as handover, or load-balancing without requiring an arbiter.

Today's network slicing is in essence equal to allocating network resources in a dumb pipe approach, i.e., in this context, the network simply transfers data to/from a device from/to e.g. Internet according to an end-to-end principle. The present method adds contextual knowledge and (smart) data about the devices and network elements within each network slice. The "smart" data can then be "traded" between the neighboring network elements, enabling distributed management to be implemented. A network element (or network slice) gathering information may take at least some decisions locally; for instance, a radio access node 2a, 2b may exchange information with its neighboring radio access nodes and make a decision on whether it may take over or assist in serving a particular device 3a, 3b in order for the device to obtain its agreed upon SLA.

The method according to the present teachings is also useful when devices 3a, 3b are moving or being allocated dynamically to different network elements. This behavior of different network elements joining or leaving the network slice is easily handled according to the present teachings, e.g. by implementing a Gossip type of protocol. In short, the described method allows for transporting contextual info about devices between network elements in a dynamic context as well as in a static one.

A few examples on information that may be negotiated and/or exchanged between network elements comprise:
- Information related to a device, for instance utilization rates, type of device, measurements, capacity, etc. This information can be used by the network element (and for the network slice that the network element is part of or is to become part of) in order to pre-allocate or allocate the resources that meet the SLA of the device.
- Information related to a network element, for instance location, usage (e.g. type of services that the user is provided with and network bandwidth required by it), etc. This information can be used by the network element (for the network slice that it is or might become part of) in order to pre-allocate or allocate the resources that meet the SLA.
- Information about the network status, such as end-to-end network latency, overall network capacity, etc. A few examples on how to use gossip protocol to do aggregation in the communications system 1 comprise: average load of network elements in a cluster, sum of free capacity in distributed storage, total number of network elements or network slices in the communications system 1, etc.
- Information about suspicious devices, for instance a list on such devices. This enables an improved and adequate security. For instance, if a network element detects a device having a re-transmission rate that is abnormal (malware), information about this device can be disseminated to all neighboring network elements and eventually to all network elements of the communications system 1. The malfunctioning, possibly malicious, device may then quickly be denied access to the communications system 1.

An example of a standardized data exchange between network elements is a handover process for a device 3. Briefly and simplified: in the handover of the device 3a, 3b an ongoing call (or other service) gets transferred from one cell to another cell as the device 3a, 3b moves through the coverage area of a cellular network. The signal strength of the currently serving base station 2, as well as the signal strengths of the surrounding base stations, together with the availability of channels, comprises information needed to decide on execution of the handover. The device 3a, 3b, exemplified by a mobile station in figure 1, monitors the strength of the base stations in the cellular network in order to know the status of channel availability, and the communications system 1 makes a decision about the handover.

In GSM, handover decisions are generally initiated at the BTS 2a, 2b but handled at the BSC 5a, 5b level unless there is a requirement to change MSC 6 in which case, the MSC 6 will handle the request. This is because the BTS 2 does not know about the capabilities of neighboring BTSs, i.e., if necessary resources (free channels) are available. All the communication is hierarchical with the BTS being the root of the tree. This is disadvantageous, as described in the background section, but is overcome by the present teachings. In particular, by implementing the present teachings, a decentralized management is provided, wherein the network elements may exchange information and negotiate on a handover directly, instead of involving e.g. the BSC and possibly also MSC.

Figure 2 illustrates information spreading using a gossip based algorithm. In the figure, a network element is represented by a circle. One network element 2a, 2b, 4, 5a, 5b, 6, 7 in the communications system 1 wishes to spread some information v to other network elements of the communications system 1. In every time interval t, each network element nᵢ will randomly choose one of its neighbor network elements nj (i!=j) to exchange information. If any of nᵢ or nⱼ has information v, then after exchanging information, both nᵢ and nⱼ will have information v.

This information spreading is illustrated in figure 2 in four time intervals, indicated at the bottom of figure 2. Further, as mentioned, figure 2 also illustrates a number of network elements represented by circles. In a first time interval, a first network element has information to spread, which is indicated by the first network element being represented by a filled-in circle. In a second time interval it shares the information with a second network element, as indicated by the arrow. The second network element now also has the information, as indicated by it being represented by the filled-in circle. In the third time interval the second network element shares the information with a third network element (as indicated by the arrow), while the first network element shares the information with a fourth network element. In the fourth time interval, the network elements that have the information (filled in circles) share the information with other network elements in a corresponding manner.

In this way, Gossip protocol has some interesting characteristic, which is taken advantage of according to the present teachings for enabling a distributed management. The protocol is simple e.g. in that every network element just needs to randomly pick up neighbor network element to pull or push information. It is further very reliable and robust, e.g. since there is no single master in this setup, and no single point of failure. Further, since every network element2a, 2b, 4, 5a, 5b, 6, 7 selects a neighbor network element randomly,information is spreading in the communications system 1 randomly.

There is no need to pre-setup the communications system 1, and no static routing is required, so it is highly suitable for dynamic communication systems where the network elements 2a, 2b, 4, 5a, 5b, 6, 7 are constantly joining and leaving a network slice.

Still further, the use of gossip based protocols is, as realized by the inventors behind the present teachings, suitable for very large-scale communication systems. Since there is no single master required in the network, this protocol can almost scale infinitely.

In general, the gossip algorithm is very efficient and robust, but since it is nondeterministic how information is going to spread in the communication system, the latency to transfer information to a specific network element in the communications system 1 might be quite high. When combining the decentralized management method suggested herein with a centralized management, also latency sensitive services may still benefit from the present teachings, e.g. in that the network elements will receive information, which it may take advantage of in different way (e.g. facilitating handover preparations).

Given the nature of Gossip protocol described above, it is very suitable for instance for the following cases in 5G network slices in order to, for instance, exchange information about a moving device e.g. for handover purposes, in order to exchange information in a heterogeneous network e.g. information such as device profile of network access providing for instance a pattern of downlink and uplink traffic, protocol used, retransmission rate etc., in order to exchange data that is not latency sensitive, to guarantee that the communications system will eventually reach a desirable outcome (safety) e.g. spreading device behavior for enabling traffic optimization and providing an improved user experience.

As an example on the use of gossip protocol according to the present teachings, a first radio access node 2a controlling a small cell may require less information than a second radio access nodes 2b controlling a larger cell. A first radio access node 2a may be seen as having only "a small" portion of the network slice. The second radio access node 2b with high capacity may require more information and/or negotiate on resources from neighboring network elements, e.g. from the first radio access node 2a as it has more capabilities and a bigger portion of the network slice. Neighboring radio access nodes can then use gossiping to negotiate and agree about the contextual amount of data to exchange.

For example, based on a device signature (or analytics profile), the neighboring radio access node that currently handles a network slice by means of which the device is served can decide if adding a specific device 3 will still guarantee meeting the SLA. This is in contrast to centralized network management that requires a single centralized node to allocate network resource and decide on allocation of such resources.

A network node, e.g. the first radio access node 2a, builds an analytics profile (or signature) of a device 3 and during a handover a part or all of this information is carried over to the next network node, e.g. the second radio access node 2b, based on the negotiation. This signature can be built based on an aggregation of the device's behavior. As a particular example, in video streaming there is a key frame which appears at certain intervals which may be constant or varying. The pattern of the key frames may be provided as information on the device's behavior.

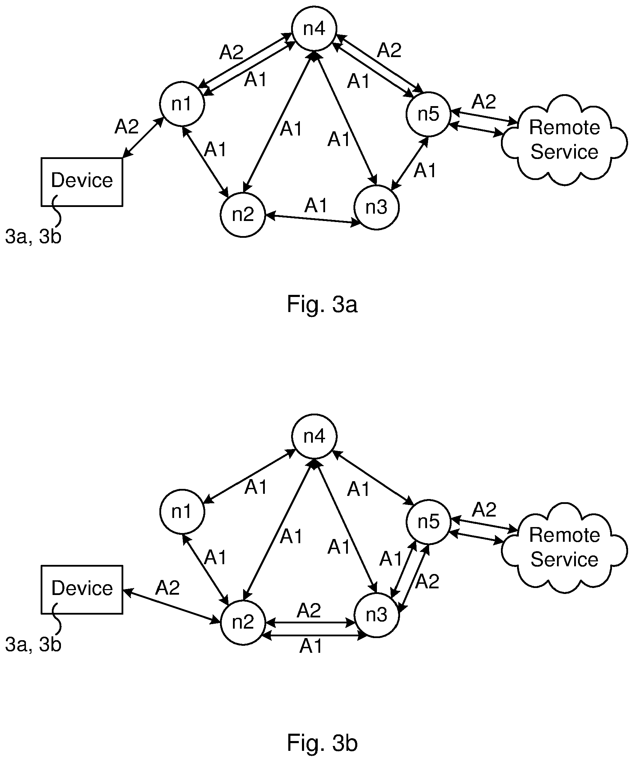

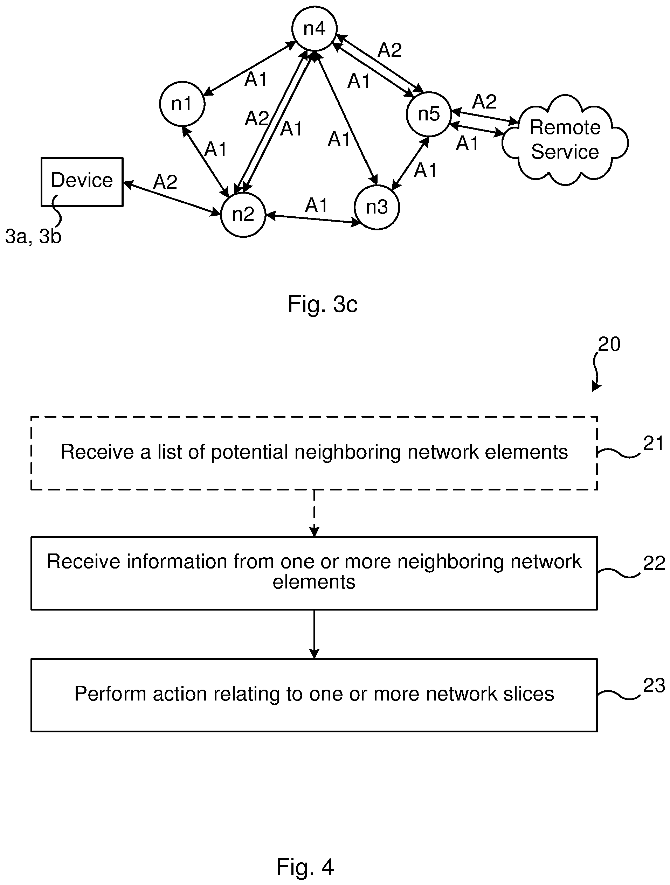

Figures 3a, 3b and 3c illustrate the changing of a network slice. In particular, a change in setup in the communications system 1 is illustrated and described in the following. In a network slice, one or more network elements may be removed or added for different reasons. The setup change may be for any reason, e.g. due to a device 3a, 3b requiring higher data rate and hence change of network slice or due to high load in one network element that is part of a certain network slice or due to a network element of the network slice being shut down for some reason (e.g. malfunction) or due to location change of the device. As an example of the location change of the device, a first network element may be heavily loaded and a second network element of the same type may get more free resources or be launched. The first network element, e.g. having exchanged information with the second network element, may push the device to the second network element in order to reduce its load. In these figures, the device 3 denotes a device requesting a network slice for a specific service. As a particular example, the device 3 may comprise a sensor of a sensor network requiring connectivity, i.e. network access, to an application, which for instance may comprise a software application stored in an Internet server. As another particular example, the device 3 may comprise a mobile phone requesting connectivity to another mobile phone or to Internet over the communications system 1.

In the figures 3a, 3b and 3c, network elements providing network connectivity, also denoted network access herein, for the device 3 are denoted first network element n1, second network element n2, third network element n3, fourth network element n4 and fifth network element n5. "Remote Service" denotes the particular remote service consumed by the device 3 and provided by a service provider. Arrows indicated by A1 describe how the network elements n1, n2, n3, n4, n5 are interconnected (e.g. by wired connections), wherein also connection to the service provider (Remote Service) is indicated. The arrows indicated by A2 interconnect network elements of a particular network slice that is created for the device 3 in order for it to access the remote service.

Figure 3a shows the initial network elements n1, n4 and n5 of a network slice. The device 3 obtains the service requested from the Remote Service by means of these network elements. As a particular example, the first network element n1 of the network slice may comprise a first BTS 2a, the fourth network element n4 may comprise a first BSC 5a and the fifth network element n5 may comprise a gateway 7. The Remote Service may comprise an application provided over the Internet. It is noted that in other embodiments, the network elements offering the Remote Service may also be part of the communications network 1. For instance, if the Remote Service comprises an application stored on a server of the Internet, then the server may be one of the network elements of the network slice.

Figure 3b illustrates the changes to the network slice when the device's 3 access point is changed. For instance, the first network element n1 may be a first BTS 2a and this radio access node may be changed to a second BTS 2b. Such access point change can be triggered, for instance, by the device 3 moving to a new location out of coverage of the first network element n1, or by the device 3 changing the network access method, for instance from cellular network access to Wi-Fi network access. As illustrated in figure 3b by arrow between the device 3a, 3b and the second network element n2, the second network element n2 now becomes the access point for device 3, and the network slice changes from comprising network elements n1, n4, n5 to comprising network elements n2, n3 and n5. The device 3 then obtains the access to the remote service by this changed network slice comprising the second network element n2, the third network element n3 and the fifth network element n5. The second network element n2 may be a second BTS 2b, the third network element n3 may be a second BSC 5b and the fifth network element n5 may again be a gateway 7.

In figure 3c, the access point (network element n2) is unchanged compared to the situation of figure 3b, but there are internal network changes. The second network element n2, the third network element n3 and the fifth network element n5 are now forming the network slice; i.e. the third network element n3 is changed to the fourth network element n4.

There can be several reasons for such internal network change:
- The device 3a, 3b changes the service level requirement and requests more bandwidth that is more than the third network element n3 can provide, so the fourth network element n4, having available bandwidth, is involved instead.
- There may be an internal network change, for instance the third network element n3 being temporary unavailable for instance due to a system upgrade, or the fourth network element n4 having high priority in the communications system 1 and hence being able to meet e.g. the change of service level requirement from the device 3.

So in a summery, in sG-network slice context, the source and destination (device 3a, 3b, and Remote Service, respectively) are the same, but internal network changes may be frequent and different network slices may be used. It is noted that 5G network is a heterogeneous network, which brings more complexity to the network slice setup.

In the following some specific use cases are described in some more detail for illustrating how the present teachings may be applied.

### Spreading of information, e.g. of suspicious devices

Network security is always a key concern for operators. In 5G contexts, it is more challenging to maintain a reliable network due to the complexity of network. Using gossip protocol to spread information about suspicious device is a perfect fit. A simple agent (e.g. server agent) can be deployed on a network element and be configured to monitor all connected devices and generate alarm when detecting any suspicious behavior, such as for instance a high retransmission rate. Then instead of reporting this information to upstream network element, the network element may use the gossip protocol to spread information to the entire communications system. Since the gossip protocol is a reliable way to spread information, the information is able to spread wider in the communications system.

Further, the gossip protocol supports both pull and push mechanisms, so even if an infected network element is not responding due to an attack (e.g. a denial-of-service attack), it is possible for neighboring network elements to detect this. A first network element may send (pull) a request for information from a second network element, and if the second network element is not responding to the pull request then the first network element may use the gossip protocol to spread information about the second network element not responding, and it might also receive such information from other network elements.

### Spreading device behavior for traffic optimization and providing improved user experience

Traffic behavior detection algorithm can be deployed on the network element in order to identify the traffic patterns of the devices. For example, if a device is streaming video in the network slice, which the network element is part of, then there will be repeated key frame and non-key frame in different packets. Key frame is a frame in which a complete image is stored in the data stream and the key frame has a big size. In order to save bandwidth, stream servers usually only produces key frames in every few frames. Other frames are non-key frames that are incremental changes between frames. The network element can hence detect such traffic pattern and use this to generate optimized bandwidth scheduling and reservation. This will also provide an improved user experience, by the network element being able to predict a key frame packet and prioritize it. All these information can be spread to neighboring network elements with the gossip protocol, so that when the device moves to neighboring network elements, the same optimization and prioritization can continue. A benefit gained from the gossip protocol in this use case is scalability. The number of devices in the communications system is huge and possible services provided by the communications system are very different. Using the gossip protocol, each network element can spread information without need of a centralized management node.

### Network status aggregation

Aggregation provides a summary of some global network property. It allows local access to global information. For example, in a sensor network comprising e.g. temperature devices, if a network element requires to know about the average temperature of the whole sensor network, each two random devices can calculate and store the average of their temperatures, i.e. temperature devices A and B have measured temperature as 6 degrees and 10 degrees respectively. Using the gossip protocol, each one sends its temperature to the other and changes their average value to the average of the two, i.e. 8 degrees. Continuing this approach, after a while all the network elements know about the average of the temperature in the whole sensor network.

The various features and embodiments that have been described may be combined in different ways, examples of which are given in the following, with reference first to figure 4.

Figure 4 illustrates a flow chart over steps of an embodiment of a method in a network element in accordance with the present teachings.

A method 20 of distributed management of network slices is provided. A network slice is composed of one or more network elements and is involved in the providing of network connectivity to services for one or more devices. That is, each network slice comprises one or more network elements 2a, 2b, 4, 5a, 5b, 6, 7 and provides one or more devices 3a, 3b with network connectivity to services. Examples of services comprise applications provided by packet data networks, such as e.g. Internet, the service of wireless communication, sensor networks, network for managing and remote control of vehicles, etc. In short, the service maybe any type of service requiring network connectivity.

The method 20 is performed in a network element 2a, 2b, 4, 5a, 5b, 6, 7 of a communications system 1 and comprises:
- receiving 22, by means of a gossip protocol, information from one or more neighboring network elements 2a, 2b, 4, 5a, 5b, 6, 7, and
- performing 23, based on the received information, an action relating to one or more network slices, which network slices provide a first device 3a with wireless connectivity to a service. The management in the network element may entail managing a single network slice, which in turn may comprise only the network element itself or several network elements. The management in the network element may in other instances comprise managing several network slices, each network slice comprising one or more network elements.

The method 20 brings about several advantages, e.g. improved user experience in that devices 3a, 3b may stay connected, although a network element currently involved in providing network connectivity might be down. By using the gossip protocol among network elements (or network slices), the non-functioning network element may rapidly be replaced by another one and the currently ongoing service be uninterrupted. Further, the method 20 provides scalability even to billions of network elements. By the distributed management enabled by the method 20, network slices can be changed quickly and be adapted to the needs of a device, the device e.g. changing SLA during ongoing session. Further still, the method 20 provides increased robustness, e.g. by not having a single master node, and no single point of failure. For instance, since the network slices maybe quickly changed to adapt to current situation, a non-functioning network element of a network slice may quickly, in particular during ongoing session, changed to another network element. Using the gossip protocol, information such as available capacity may be exchanged between network elements. Available capacity may, for instance, comprise available processing capacity and/or communications resources.

In an embodiment, the method 20 comprises:
- selecting randomly one or more neighboring network elements 2a, 2b, 4, 5a, 5b, 6, 7, and
- sending information to the selected neighboring network elements 2a, 2b, 4, 5a, 5b, 6,7.

The sending of information to neighboring network elements 2a, 2b, 4, 5a, 5b, 6, 7 and the receiving of information from neighboring network elements 2a, 2b, 4, 5a, 5b, 6, 7 are performed by means of the gossip protocol.

In a variation of the above embodiment, the method 20 comprises, prior to the sending of information, receiving 21 from a network element 2a, 2b, 4, 5a, 5b, 6, 7 a list of potential neighboring network elements 2a, 2b, 4, 5a, 5b, 6, 7.

In various embodiments, the information comprises information related to service requirements of the first device 3a and/or information related to capacity of neighboring network elements 2a, 2b, 4, 5a, 5b, 6, 7, and wherein the step of performing 23 the action comprises:
- allocating, based on the information, communication resources for providing the network connectivity to the first device 3a if being a network element of the one or more network slices, and
- pre-allocating, based on the information, communication resources for providing the network connectivity to the first device 3a if becoming a network element of the one or more network slices.

In various embodiments, the information comprises information related to an improper behavior of the first device 3a, and wherein the step of performing 23 the action comprises blocking the first device 3a from the network connectivity by:
- terminating the wireless connectivity to the service if being an element of the one or more network slices, and
- sending information about the first device 3a to neighboring network elements 2a, 2b, 4, 5a, 5b, 6, 7 if not being an element of the one or more network slices.

In various embodiments, the information comprises information on a status parameter in the communications system 1, and wherein the step of performing 23 the action comprises aggregating the corresponding status parameter for the one or more network slices and sending the aggregate to one or more neighboring network elements 2a, 2b, 4, 5a, 5b, 6, 7.

In various embodiments, the method 20 comprises:
- receiving, from a first neighboring network element 2a, 2b, 4, 5a, 5b, 6, 7, information relating to a service level agreement update for the first device 3a, and
- deciding, based on the received information, whether or not to be part of the one or more network slices.

In various embodiments, the method comprises dynamically discovering network elements 2a, 2b, 4, 5a, 5b, 6, 7. Such dynamic discovery may be performed by receiving information from a network element and/or by sending information to a network element 2a, 2b, 4, 5a, 5b, 6, 7 and receiving in response a message from the network element 2a, 2b, 4, 5a, 5b, 6, 7. The network element 2a, 2b, 4, 5a, 5b, 6, 7 may hence receive information from one or more network elements, in particular neighboring network elements and thereby discover these network elements. The may also, or as an alternative, send information to other network elements, e.g. broadcasting the information which may then be received by other (in particular neighboring) network elements. If the sending network element receives a response then it becomes aware of the existence of the (neighboring) network elements that sent the response.

In various embodiments the gossip protocol comprises a dissemination protocol disseminating information to any network element 2a, 2b, 4, 5a, 5b, 6, 7 of the communications system 1 and/or an aggregation protocol providing a summary of the communications system 1 and/or the one or more network slices.

In various embodiments the network element 2a, 2b comprises an access node of a radio access network. The network element 2a, 2b may for instance comprise a BTS or an eNB of a radio access network. As another example, the radio access network may comprise a WLAN and the network element 2a, 2b may hence comprise an access point (AP) of the WLAN.

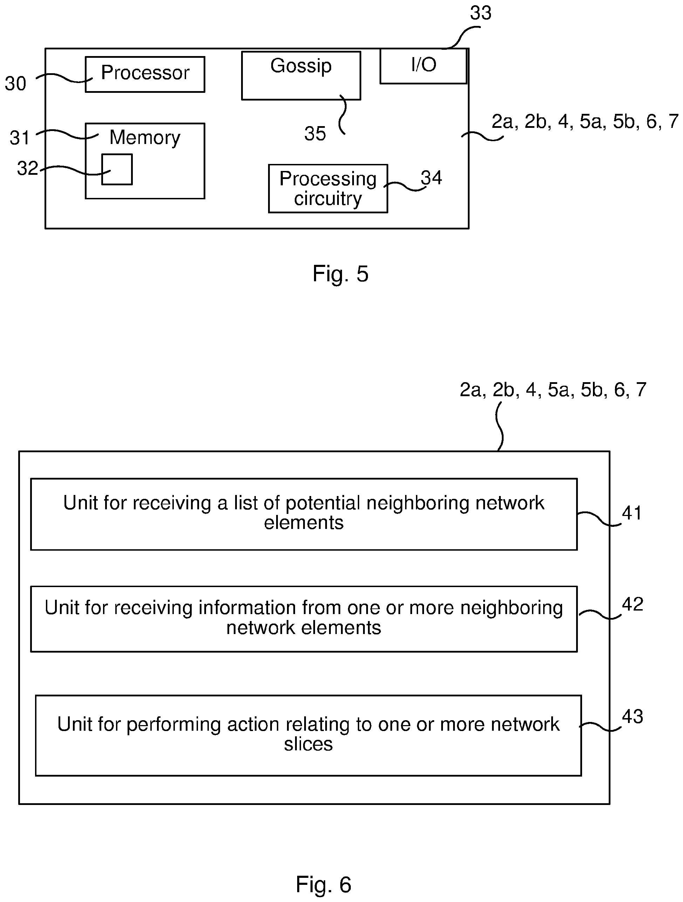

Figure 6 illustrates schematically a network element and means for implementing embodiments of the present teachings.

The 2a, 2b, 4, 5a, 5b 6, 7 comprises a processor 30 comprising any combination of one or more of a central processing unit (CPU), multiprocessor, microcontroller, digital signal processor (DSP), application specific integrated circuit etc. capable of executing software instructions stored in a memory 31 which can thus be a computer program product 31. The processor 30 can be configured to execute any of the various embodiments of the method for instance as described in relation to figure 5.

The memory 31 can be any combination of read and write memory (RAM) and read only memory (ROM), Flash memory, magnetic tape, Compact Disc (CD)-ROM, digital versatile disc (DVD), Blu-ray disc etc. The memory 31 may also comprise persistent storage, which, for example, can be any single one or combination of magnetic memory, optical memory, solid state memory or even remotely mounted memory.

The network element 2a, 2b, 4, 5a, 5b 6, 7 also comprises an input/output device 33 (indicated by I/O in figure 6) for communicating with other network elements 2a, 2b, 4, 5a, 5b 6, 7. Such input/output device 33 of the network element 2a, 2b, 4, 5a, 5b 6, 7 may comprise a wireless communication interface (e.g. radio interface) and/or wired communication interface. For instance, if the network element 2a, 2b, 4, 5a, 5b 6, 7 comprises a radio access node 2a, 2b it may comprise a wireless interface towards the devices 3a, 3b, such as e.g. (E-UTRA) protocol, and also a wired communication network towards other radio access nodes 2a, 2b, e.g. X2 interface, and/or towards core network nodes such as MME using e.g. Si protocol.

The network element 2a, 2b, 4, 5a, 5b 6, 7 comprises a gossip protocol, for instance in form of a gossip protocol software module 35. The network element 2a, 2b, 4, 5a, 5b 6, 7 may comprise computer program code for using under layer gossip protocol software module for sending different information to other network elements, i.e. applications using gossip protocol. The gossip protocol software module 35 may comprise a feature such as member discovery.

The network element 2a, 2b, 4, 5a, 5b 6, 7 may also comprise additional processing circuitry, schematically indicated at reference numeral 34, for implementing the various embodiments according to the present teachings.

The present teachings provide computer programs 32 for the network element 2a, 2b, 4, 5a, 5b 6, 7. The computer program 32 comprises computer program code, which, when executed on at least one processor 30 of the network element 2a, 2b, 4, 5a, 5b 6, 7causes the network element 2a, 2b, 4, 5a, 5b 6, 7 to perform the method 20 according to any of the described embodiments thereof.

The present disclosure also encompasses computer program products 31 comprising a computer program 32 for implementing the embodiments of the method as described, and a computer readable means on which the computer program 32 is stored. The computer program product 31 may, as mentioned earlier, be any combination of random access memory (RAM) or read only memory (ROM), Flash memory, magnetic tape, Compact Disc (CD)-ROM, digital versatile disc (DVD), Blu-ray disc etc.

A network element 2a, 2b, 4, 5a, 5b 6, 7 of a communications system 1 for distributed management of network slices is provided, wherein each network slice comprises one or more network elements 2a, 2b, 4, 5a, 5b, 6, 7 and provides one or more devices 3a, 3b with network connectivity to services. The network element 2a, 2b, 4, 5a, 5b, 6, 7 is configured to:
- receive, by means of a gossip protocol, information from one or more neighboring network elements 2a, 2b, 4, 5a, 5b, 6, 7, and
- perform, based on the received information, an action relating to one or more network slices, which network slices provide a first device 3a with wireless connectivity to a service.

The network element 2a, 2b, 4, 5a, 5b 6, 7 may be configured to perform the above steps e.g. by comprising one or more processors 30 and memory 31, the memory 31 containing instructions executable by the processor 30, whereby the network element 2a, 2b, 4, 5a, 5b 6, 7 is operative to perform the steps. In case of several processors 30 (not illustrated) they may be configured to perform all steps of the method 20 or only some of the steps.

In an embodiment, the network element 2a, 2b, 4, 5a, 5b, 6, 7 is configured to:
- select randomly one or more neighboring network elements 2a, 2b, 4, 5a, 5b, 6, 7, and
- send information to the selected neighboring network elements 2a, 2b, 4, 5a, 5b, 6, 7.

In a variation of the above embodiment, the network element 2a, 2b, 4, 5a, 5b, 6, 7 is configured to, prior to the sending of information, receive from a network element 2a, 2b, 4, 5a, 5b, 6, 7 a list of potential neighboring network elements 2a, 2b, 4, 5a, 5b, 6, 7.

In various embodiments, the information comprises information related to service requirements of the first device 3a and/or information related to capacity of neighboring network elements 2a, 2b, 4, 5a, 5b, 6, 7, and wherein the network element 2a, 2b, 4, 5a, 5b, 6, 7 is configured to perform the action:
- allocating, based on the information, communication resources for providing the network connectivity to the first device 3a if being a network element of the one or more network slices, and
- pre-allocating, based on the information, communication resources for providing the network connectivity to the first device 3a if becoming a network element of the one or more network slices.

In various embodiments, the information comprises information related to an improper behavior of the first device 3a, and wherein network element 2a, 2b, 4, 5a, 5b, 6, 7 is configured to perform the action of blocking the first device 3a from the network connectivity by:
- terminating the wireless connectivity to the service if being an element of the one or more network slices, and
- sending information about the first device 3a to neighboring network elements 2a, 2b, 4, 5a, 5b, 6, 7 if not being an element of the one or more network slices.

In various embodiments, the information comprises information on a status parameter in the communications system 1, and wherein the network element 2a, 2b, 4, 5a, 5b, 6, 7 is configured to perform the action of aggregating the corresponding status parameter for the one or more network slices and sending the aggregate to one or more neighboring network elements 2a, 2b, 4, 5a, 5b, 6, 7.

In various embodiments, the network element 2a, 2b, 4, 5a, 5b, 6, 7 is configured to:
- receive, from a first neighboring network element 2a, 2b, 4, 5a, 5b, 6, 7, information relating to a service level agreement update for the first device 3a, and
- decide, based on the received information, whether or not to be part of the one or more network slices.

In various embodiments, the network element 2a, 2b, 4, 5a, 5b, 6, 7 is configured to dynamically discover network elements 2a, 2b, 4, 5a, 5b, 6, 7 by:
- receiving information from a network element 2a, 2b, 4, 5a, 5b, 6, 7 and/or by
- sending information to a network element 2a, 2b, 4, 5a, 5b, 6, 7 and receiving in response a message from the network element 2a, 2b, 4, 5a, 5b, 6, 7.

In various embodiments the gossip protocol comprises a dissemination protocol disseminating information to any network element 2a, 2b, 4, 5a, 5b, 6, 7 of the communications system 1 and/or an aggregation protocol providing a summary of the communications system 1 and/or the one or more network slices.

In various embodiments the network element 2a, 2b comprises an access node of a radio access network.

Figure 7 illustrates a network element comprising function modules/software modules for implementing embodiments of the present teachings.

In an aspect, means are provided, e.g. function modules or units, that can be implemented using software instructions such as computer program executing in a processor and/or using hardware, such as application specific integrated circuits, field programmable gate arrays, discrete logical components etc., or any combination thereof.

A network element 2a, 2b, 4, 5a, 5b 6, 7 is provided for distributed management of network slices, wherein each network slice comprises one or more network elements and provides one or more devices with network connectivity to services. The network element 2a, 2b, 4, 5a, 5b 6, 7 comprises a first unit 42 for receiving, by means of a gossip protocol, information from one or more neighboring network elements. Such first unit 42 may for instance comprise processing circuitry adapted for such exchange (e.g. a unit such as e.g. unit 35 described with reference to figure 5).

The network element 2a, 2b, 4, 5a, 5b 6, 7 comprises a second unit 43 for performing, based on the received information, an action relating to one or more network slices, which network slices provide a first device with wireless connectivity to a service. Such second unit 43 may for instance comprise processing circuitry adapted for performing such action (e.g. a unit such as unit 34 described with reference to figure 5).

The network element 2a, 2b, 4, 5a, 5b 6, 7 may comprise still further units. For instance, the network element may comprise a third unit 41 for receiving from a network element a list of potential neighboring network elements. Such third unit 41 may for instance comprise processing circuitry for receiving and/or communication interface (e.g. units 33, 34 and/or 35 described with reference to figure 5).

In summary, the present disclosure describes methods and network elements for, among other things, improving service coverage for network elements, and in particular 5G network elements. The present teachings bring about several advantages, such as:
- The devices 3a, 3b can stay connected e.g. to the "cloud" (i.e. to services that the device can access remotely e.g. over the Internet), although a network element currently involved in providing network connectivity might be down. By using the gossip protocol among network elements (or network slices), a non-functioning network element may rapidly be replaced by another one and the currently ongoing service be uninterrupted.
- Self-organizing edges and self-healing edges, e.g. information about a network element not functioning properly may be spread to other network elements using the gossip protocol and proper action may be taken e.g. such as replacing a network element of a network slice with another network element.
- Eventual consistency.
- Scalability to billions of network elements. By the distributed management enabled by the present teachings, network slices can be changed quickly and be adapted to the needs of a device, the device e.g. changing SLA during ongoing session. A network slice may comprise a part of a network element, e.g. part of a server. For instance, the network slice may comprise part of a server, e.g. a virtual machine.
- Increased robustness, e.g. by not having a single master node, and no single point of failure. For instance, since the network slices may be quickly changed to adapt to current situation, a non-functioning network element of a network slice may quickly, in particular during ongoing session, changed to another network element. Using the gossip protocol, information such as available capacity may be exchanged between network elements. Available capacity may, for instance, comprise available processing capacity and/or communications resources.
- Increased security of network. The earlier described scenario of a malfunctioning device is one example of such increased security provided by the present teachings. The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. A method (20) of distributed management of network slices, wherein each network slice comprises one or more network elements (2a, 2b, 4, 5a, 5b, 6, 7) and provides one or more devices (3a, 3b) with network connectivity to services, the method (20) being performed in a network element (2a, 2b, 4, 5a, 5b, 6, 7) of a communications system (1) and comprising:
- receiving (22), by means of a gossip protocol, information from one or more neighboring network elements (2a, 2b, 4, 5a, 5b, 6, 7), and
- performing (23), based on the received information, an action relating to one or more network slices, which network slices provide a first device (3a) with wireless connectivity to a service, wherein the information comprises information related to a service requirement of the first device, and the step of performing the action comprises allocating, based on the information, communication resources for providing the network connectivity to the first device.

2. The method (20) as claimed in claim 1, comprising:
- selecting randomly one or more neighboring network elements (2a, 2b, 4, 5a, 5b, 6, 7), and
- sending information to the selected neighboring network elements (2a, 2b, 4, 5a, 5b, 6,7).

3. The method (20) as claimed in claim 2, comprising, prior to the sending of information, receiving (21) from a network element (2a, 2b, 4, 5a, 5b, 6, 7) a list of potential neighboring network elements (2a, 2b, 4, 5a, 5b, 6, 7).

4. The method (20) as claimed in any of the preceding claims, wherein the step of performing (23) the action further comprises:
- pre-allocating, based on the information, communication resources for providing the network connectivity to the first device (3a) if becoming a network element of the one or more network slices.

5. The method (20) as claimed in any of the preceding claims, wherein the information comprises information related to an improper behavior of the first device (3a), and wherein the step of performing (23) the action comprises blocking the first device (3a) from the network connectivity by:
- terminating the wireless connectivity to the service if being an element of the one or more network slices, and
- sending information about the first device (3a) to neighboring network elements (2a, 2b, 4, 5a, 5b, 6, 7) if not being an element of the one or more network slices.

6. The method (20) as claimed in any of the preceding claims, wherein the information comprises information on a status parameter in the communications system (1), and wherein the step of performing (23) the action comprises aggregating the corresponding status parameter for the one or more network slices and sending the aggregate to one or more neighboring network elements (2a, 2b, 4, 5a, 5b, 6, 7).

7. The method (20) as claimed in any of the preceding claims, comprising
- receiving, from a first neighboring network element (2a, 2b, 4, 5a, 5b, 6, 7), information relating to a service level agreement update for the first device (3a), and
- deciding, based on the received information, whether or not to be part of the one or more network slices.

8. The method (20) as claimed in any of the preceding claims, comprising dynamically discovering network elements (2a, 2b, 4, 5a, 5b, 6, 7) by:
- receiving information from a network element (2a, 2b, 4, 5a, 5b, 6, 7) and/or by
- sending information to a network element (2a, 2b, 4, 5a, 5b, 6, 7) and receiving in response a message from the network element (2a, 2b, 4, 5a, 5b, 6, 7).

9. The method (20) as claimed in any of the preceding claims, wherein the gossip protocol comprises a dissemination protocol disseminating information to any network element (2a, 2b, 4, 5a, 5b, 6, 7) of the communications system (1) and/or an aggregation protocol providing a summary of the communications system (1) and/or the one or more network slices.

10. The method (20) as claimed in any of the preceding claims, wherein the network element (2a, 2b) comprises an access node of a radio access network.

11. A computer program (32) for a network element (2a, 2b, 4, 5a, 5b, 6, 7) for distributed management of network slices, wherein each network slice comprises one or more network elements (2a, 2b, 4, 5a, 5b, 6, 7) and provides one or more devices (3a, 3b) with network connectivity to services, the computer program (32) comprising computer program code, which, when executed on at least one processor on the network element (2a, 2b, 4, 5a, 5b, 6, 7) causes the (2a, 2b, 4, 5a, 5b, 6, 7) to perform the method (20) according to any one of claims 1-10.

12. A computer program product (31) comprising a computer program (32) as claimed in claim 11 and a computer readable means on which the computer program (32) is stored.

13. A network element (2a, 2b, 4, 5a, 5b, 6, 7) of a communications system (1) for distributed management of network slices, wherein each network slice comprises one or more network elements (2a, 2b, 4, 5a, 5b, 6, 7) and provides one or more devices (3a, 3b) with network connectivity to services, the network element (2a, 2b, 4, 5a, 5b, 6, 7) being configured to:
- receive, by means of a gossip protocol, information from one or more neighboring network elements (2a, 2b, 4, 5a, 5b, 6, 7), and
- perform, based on the received information, an action relating to one or more network slices, which network slices provide a first device (3a) with wireless connectivity to a service, wherein the information comprises information related to a service requirement of the first device, and to perform the action comprises allocating, based on the information, communication resources for providing the network connectivity to the first device.

14. The network element (2a, 2b, 4, 5a, 5b, 6, 7) as claimed in claim 13, configured to:
- select randomly one or more neighboring network elements (2a, 2b, 4, 5a, 5b, 6, 7), and
- send information to the selected neighboring network elements (2a, 2b, 4, 5a, 5b, 6, 7).

15. The network element (2a, 2b, 4, 5a, 5b, 6, 7) as claimed in claim 14, configured to, prior to the sending of information, receive from a network element (2a, 2b, 4, 5a, 5b, 6, 7) a list of potential neighboring network elements (2a, 2b, 4, 5a, 5b, 6, 7).

## Patentansprüche

1. Verfahren (20) zur verteilten Verwaltung von Netzwerk-Slices, wobei jeder Netzwerk-Slice ein oder mehrere Netzwerkelemente (2a, 2b, 4, 5a, 5b, 6, 7) umfasst und eine oder mehrere Vorrichtungen (3a, 3b) mit Netzwerkkonnektivität zu Diensten versieht, wobei das Verfahren (20) in einem Netzwerkelement (2a, 2b, 4, 5a, 5b, 6, 7) eines Kommunikationssystems (1) durchgeführt wird und umfasst:
- Empfangen (22) von Informationen von einem oder mehreren benachbarten Netzwerkelementen (2a, 2b, 4, 5a, 5b, 6, 7) mittels eines Gossip-Protokolls, und
- Ergreifen (23) einer Maßnahme in Bezug auf einen oder mehrere Netzwerk-Slices basierend auf den empfangenen Informationen, welche Netzwerk-Slices eine erste Vorrichtung (3a) mit Drahtloskonnektivität zu einem Dienst versehen, wobei die Informationen Informationen in Bezug auf eine Dienstanforderung der ersten Vorrichtung umfassen, und der Schritt des Ergreifens der Maßnahme ein Zuweisen von Kommunikationsressourcen zum Bereitstellen der Netzwerkkonnektivität für die erste Vorrichtung basierend auf den Informationen umfasst.

2. Verfahren (20) nach Anspruch 1, umfassend:
- zufälliges Auswählen eines oder mehrerer benachbarter Netzwerkelemente (2a, 2b, 4, 5a, 5b, 6, 7), und
- Senden von Informationen an die ausgewählten benachbarten Netzwerkelemente (2a, 2b, 4, 5a, 5b, 6, 7).

3. Verfahren (20) nach Anspruch 2, umfassend vor dem Senden von Informationen ein Empfangen (21) einer Liste von potenziellen benachbarten Netzwerkelementen (2a, 2b, 4, 5a, 5b, 6, 7) von einem Netzwerkelement (2a, 2b, 4, 5a, 5b, 6, 7).

4. Verfahren (20) nach einem der vorhergehenden Ansprüche, wobei der Schritt des Ergreifens (23) der Maßnahme ferner umfasst:
- Vorabzuweisen von Kommunikationsressourcen zum Bereitstellen der Netzwerkkonnektivität für die erste Vorrichtung (3a) basierend auf den Informationen, wenn es ein Netzwerkelement des einen oder der mehreren Netzwerk-Slices wird.

5. Verfahren (20) nach einem der vorhergehenden Ansprüche, wobei die Informationen Informationen in Bezug auf ein unangemessenes Verhalten der ersten Vorrichtung (3a) umfassen, und wobei der Schritt des Ergreifens (23) der Maßnahme ein Sperren der Netzwerkkonnektivität für die erste Vorrichtung (3a) umfasst durch:
- Beenden der Drahtloskonnektivität zum Dienst, wenn es ein Element des einen oder der mehreren Netzwerk-Slices ist, und
- Senden von Informationen über die erste Vorrichtung (3a) an benachbarte Netzwerkelemente (2a, 2b, 4, 5a, 5b, 6, 7), wenn es kein Element des einen oder der mehreren Netzwerk-Slices ist.

6. Verfahren (20) nach einem der vorhergehenden Ansprüche, wobei die Informationen Informationen über einen Statusparameter im Kommunikationssystem (1) umfassen, und wobei der Schritt des Ergreifens (23) der Maßnahme ein Sammeln des entsprechenden Statusparameters für den einen oder die mehreren Netzwerk-Slices und Senden der Sammlung an einen oder mehrere benachbarte Netzwerkelemente (2a, 2b, 4, 5a, 5b, 6, 7) umfasst.

7. Verfahren (20) nach einem der vorhergehenden Ansprüche, umfassend:
- Empfangen von Information in Bezug auf eine Dienstgütevereinbarungsaktualisierung für die erste Vorrichtung (3a) von einem ersten benachbarten Netzwerkelement (2a, 2b, 4, 5a, 5b, 6, 7), und
- Entscheiden basierend auf den empfangenen Informationen, ob es zu dem einen oder den mehreren Netzwerk-Slices gehört oder nicht.

8. Verfahren (20) nach einem der vorhergehenden Ansprüche, umfassend ein dynamisches Erkennen von Netzwerkelementen (2a, 2b, 4, 5a, 5b, 6, 7) durch:
- Empfangen von Informationen von einem Netzwerkelement (2a, 2b, 4, 5a, 5b, 6, 7) und/oder durch
- Senden von Informationen an ein Netzwerkelement (2a, 2b, 4, 5a, 5b, 6, 7) und Empfangen einer Nachricht vom Netzwerkelement (2a, 2b, 4, 5a, 5b, 6, 7) als Reaktion.

9. Verfahren (20) nach einem der vorhergehenden Ansprüche, wobei das Gossip-Protokoll ein Verteilungsprotokoll, das Informationen an jedes Netzwerkelement (2a, 2b, 4, 5a, 5b, 6, 7) des Kommunikationssystems (1) verteilt, und/oder ein Sammelprotokoll umfasst, das einen Überblick über das Kommunikationssystem (1) und/oder den einen oder die mehreren Netzwerk-Slices bereitstellt.

10. Verfahren (20) nach einem der vorhergehenden Ansprüche, wobei das Netzwerkelement (2a, 2b) einen Zugangsknoten eines Funkzugangsnetzwerks umfasst.

11. Computerprogramm (32) für ein Netzwerkelement (2a, 2b, 4, 5a, 5b, 6, 7) zur verteilten Verwaltung von Netzwerk-Slices, wobei jeder Netzwerk-Slice ein oder mehrere Netzwerkelemente (2a, 2b, 4, 5a, 5b, 6, 7) umfasst und eine oder mehrere Vorrichtungen (3a, 3b) mit Netzwerkkonnektivität zu Diensten versieht, wobei das Computerprogramm (32) Computerprogrammcode umfasst, der bei Ausführung auf mindestens einem Prozessor auf dem Netzwerkelement (2a, 2b, 4, 5a, 5b, 6, 7) das Netzwerkelement (2a, 2b, 4, 5a, 5b, 6, 7) zum Durchführen des Verfahrens (20) nach einem der Ansprüche 1 bis 10 veranlasst.

12. Computerprogrammprodukt (31), umfassend ein Computerprogramm (32) nach Anspruch 11 und ein computerlesbares Medium, auf welchem das Computerprogramm (32) gespeichert ist.

13. Netzwerkelement (2a, 2b, 4, 5a, 5b, 6, 7) eines Kommunikationssystems (1) zur verteilten Verwaltung von Netzwerk-Slices, wobei jeder Netzwerk-Slice ein oder mehrere Netzwerkelemente (2a, 2b, 4, 5a, 5b, 6, 7) umfasst und eine oder mehrere Vorrichtungen (3a, 3b) mit Netzwerkkonnektivität zu Diensten versieht, wobei das Netzwerkelement (2a, 2b, 4, 5a, 5b, 6, 7) konfiguriert ist zum:
- Empfangen von Informationen von einem oder mehreren benachbarten Netzwerkelementen (2a, 2b, 4, 5a, 5b, 6, 7) mittels eines Gossip-Protokolls, und
- Ergreifen einer Maßnahme in Bezug auf einen oder mehrere Netzwerk-Slices basierend auf den empfangenen Informationen, welche Netzwerk-Slices eine erste Vorrichtung (3a) mit Drahtloskonnektivität zu einem Dienst versehen, wobei die Informationen Informationen in Bezug auf eine Dienstanforderung der ersten Vorrichtung umfassen, und der Schritt des Ergreifens der Maßnahme ein Zuweisen von Kommunikationsressourcen zum Bereitstellen der Netzwerkkonnektivität für die erste Vorrichtung basierend auf den Informationen umfasst.

14. Netzwerkelement (2a, 2b, 4, 5a, 5b, 6, 7) nach Anspruch 13, konfiguriert zum:
- zufälligen Auswählen eines oder mehrerer benachbarter Netzwerkelemente (2a, 2b, 4, 5a, 5b, 6, 7), und
- Senden von Informationen an die ausgewählten benachbarten Netzwerkelemente (2a, 2b, 4, 5a, 5b, 6, 7).

15. Netzwerkelement (2a, 2b, 4, 5a, 5b, 6, 7) nach Anspruch 14, konfiguriert zum Empfangen einer Liste von potenziellen benachbarten Netzwerkelementen (2a, 2b, 4, 5a, 5b, 6, 7) von einem Netzwerkelement (2a, 2b, 4, 5a, 5b, 6, 7) vor dem Senden von Informationen.

## Revendications

1. Procédé (20) de gestion distribuée de tranches de réseau, dans lequel chaque tranche de réseau comprend un ou plusieurs éléments de réseau (2a, 2b, 4, 5a, 5b, 6, 7) et fournit, à un ou plusieurs dispositifs (3a, 3b), une connectivité de réseau à des services, le procédé (20) étant réalisé dans un élément de réseau (2a, 2b, 4, 5a, 5b, 6, 7) d'un système de communication (1) et comprenant :
- la réception (22), au moyen d'un protocole de commérages, d'informations en provenance d'un ou plusieurs éléments de réseau voisins (2a, 2b, 4, 5a, 5b, 6, 7), et
- la réalisation (23), sur la base des informations reçues, d'une action relative à une ou plusieurs tranches de réseau, lesdites tranches de réseau fournissant, à un premier dispositif (3a), une connectivitaé sans fil à un service, dans lequel les informations comprennent des informations relatives à une exigence de service du premier dispositif, et l'étape de la réalisation de l'action comprend l'allocation, sur la base des informations, de ressources de communication pour fournir la connectivité de réseau au premier dispositif.

2. Procédé (20) selon la revendication 1, comprenant :
- la sélection aléatoire d'un ou plusieurs éléments de réseau voisins (2a, 2b, 4, 5a, 5b, 6, 7), et
- l'envoi d'informations aux éléments de réseau voisins (2a, 2b, 4, 5a, 5b, 6, 7) sélectionnés.

3. Procédé (20) selon la revendication 2, comprenant, avant l'envoi d'informations, la réception (21), en provenance d'un élément de réseau (2a, 2b, 4, 5a, 5b, 6, 7), d'une liste d'éléments de réseau voisins (2a, 2b, 4, 5a, 5b, 6, 7) potentiels.

4. Procédé (20) selon l'une quelconque des revendications précédentes, dans lequel l'étape de la réalisation (23) de l'action comprend en outre :
- la pré-allocation, sur la base des informations, de ressources de communication pour fournir la connectivité de réseau au premier dispositif (3a) s'il devient un élément de réseau des une ou plusieurs tranches de réseau.

5. Procédé (20) selon l'une quelconque des revendications précédentes, dans lequel les informations comprennent des informations relatives à un comportement inapproprié du premier dispositif (3a), et dans lequel l'étape de la réalisation (23) de l'action comprend le blocage, au premier dispositif (3a), de la connectivité de réseau par :
- la terminaison de la connectivité sans fil au service s'il est un élément des une ou plusieurs tranches de réseau, et
- l'envoi d'informations relatives au premier dispositif (3a) aux éléments de réseau voisins (2a, 2b, 4, 5a, 5b, 6, 7) s'il n'est pas un élément des une ou plusieurs tranches de réseau.

6. Procédé (20) selon l'une quelconque des revendications précédentes, dans lequel les informations comprennent des informations relatives à un paramètre de statut dans le système de communication (1), et dans lequel l'étape de la réalisation (23) de l'action comprend l'agrégation du paramètre de statut correspondant pour les une ou plusieurs tranches de réseau et l'envoi de l'agrégation à un ou plusieurs éléments de réseau voisins (2a, 2b, 4, 5a, 5b, 6, 7).

7. Procédé (20) selon l'une quelconque des revendications précédentes, comprenant :
- la réception, en provenance d'un premier élément de réseau voisin (2a, 2b, 4, 5a, 5b, 6, 7), d'informations relatives à une mise à jour d'accord de niveau de service pour le premier dispositif (3a), et
- la décision, sur la base des informations reçues, s'il fait ou non partie des une ou plusieurs tranches de réseau.

8. Procédé (20) selon l'une quelconque des revendications précédentes, comprenant la découverte dynamique d'éléments de réseau (2a, 2b, 4, 5a, 5b, 6, 7) par :
- la réception d'informations en provenance d'un élément de réseau (2a, 2b, 4, 5a, 5b, 6, 7) ; et/ou par
- l'envoi d'informations à un élément de réseau (2a, 2b, 4, 5a, 5b, 6, 7) et la réception, en réponse, d'un message en provenance de l'élément de réseau (2a, 2b, 4, 5a, 5b, 6, 7).

9. Procédé (20) selon l'une quelconque des revendications précédentes, dans lequel le protocole de commérages comprend un protocole de dissémination disséminant des informations à n'importe quel élément de réseau (2a, 2b, 4, 5a, 5b, 6, 7) du système de communication (1) et/ou un protocole d'agrégation fournissant un récapitulatif du système de communication (1) et/ou des une ou plusieurs tranches de réseau.

10. Procédé (20) selon l'une quelconque des revendications précédentes, dans lequel l'élément de réseau (2a, 2b) comprend un nœud d'accès d'un réseau d'accès radio.

11. Programme informatique (32) pour un élément de réseau (2a, 2b, 4, 5a, 5b, 6, 7) destiné à une gestion distribuée de tranches de réseau, dans lequel chaque tranche de réseau comprend un ou plusieurs éléments de réseau (2a, 2b, 4, 5a, 5b, 6, 7) et fournit, à un ou plusieurs dispositifs (3a, 3b), une connectivité de réseau à des services, le programme informatique (32) comprenant un code de programme informatique qui, lorsqu'il est exécuté sur au moins un processeur sur l'élément de réseau (2a, 2b, 4, 5a, 5b, 6, 7), amène l'élément de réseau (2a, 2b, 4, 5a, 5b, 6, 7) à réaliser le procédé (20) selon l'une quelconque des revendications 1 à 10.

12. Produit de programme informatique (31) comprenant un programme informatique (32) selon la revendication 11 et un moyen lisible par ordinateur sur lequel le programme informatique (32) est stocké.

13. Elément de réseau (2a, 2b, 4, 5a, 5b, 6, 7) d'un système de communication (1) destiné à une gestion distribuée de tranches de réseau, dans lequel chaque tranche de réseau comprend un ou plusieurs éléments de réseau (2a, 2b, 4, 5a, 5b, 6, 7) et fournit, à un ou plusieurs dispositifs (3a, 3b), une connectivité de réseau à des services, l'élément de réseau (2a, 2b, 4, 5a, 5b, 6, 7) étant configuré pour :
- la réception, au moyen d'un protocole de commérages, d'informations en provenance d'un ou plusieurs éléments de réseau voisins (2a, 2b, 4, 5a, 5b, 6, 7), et
- la réalisation, sur la base des informations reçues, d'une action relative à une ou plusieurs tranches de réseau, lesdites tranches de réseau fournissant, à un premier dispositif (3a), une connectivité sans fil à un service, dans lequel les informations comprennent des informations relatives à une exigence de service du premier dispositif, et la réalisation de l'action comprend l'allocation, sur la base des informations, de ressources de communication pour fournir la connectivité de réseau au premier dispositif.

14. Elément de réseau (2a, 2b, 4, 5a, 5b, 6, 7) selon la revendication 13, configuré pour :
- la sélection aléatoire d'un ou plusieurs éléments de réseau voisins (2a, 2b, 4, 5a, 5b, 6, 7), et
- l'envoi d'informations aux éléments de réseau voisins (2a, 2b, 4, 5a, 5b, 6, 7) sélectionnés.

15. Elément de réseau (2a, 2b, 4, 5a, 5b, 6, 7) selon la revendication 14, configuré pour, avant l'envoi d'informations, la réception, en provenance d'un élément de réseau (2a, 2b, 4, 5a, 5b, 6, 7), d'une liste d'éléments de réseau voisins (2a, 2b, 4, 5a, 5b, 6, 7) potentiels.
